# EUROPÄISCHE PATENTSCHRIFT

(11) **EP 3 814 816 B1**
(45) Veröffentlichungstag und Bekanntmachung des Hinweises auf die Patenterteilung: **08.03.2023**
(21) Anmeldenummer: 19735265.1
(22) Anmeldetag: 27.06.2019
(51) Int. Cl.: G02B 6/28, F21V 5/00, F21S 43/20, G02B 5/18, G02F 1/29, F21S 43/14, G02B 5/32

(54) **LEUCHTENEINRICHTUNG FÜR FAHRZEUGE**
LIGHTING DEVICE FOR VEHICLES
DISPOSITIF D'ÉCLAIRAGE DE VÉHICULES

(30) Priorität: 28.06.2018 DE 102018115574
(43) Veröffentlichungstag der Anmeldung: 05.05.2021
(73) Patentinhaber: Carl Zeiss Jena GmbH, 07745 Jena (DE)
(72) Erfinder: VOJTISEK, Petr, 07749 Jena (DE)
(74) Vertreter: Sticht, Andreas
(86) Internationale Anmeldenummer: PCT/EP2019/067122
(87) Internationale Veröffentlichungsnummer: WO 2020/002491

(56) Entgegenhaltungen:
- WO-A1-2019/076985
- DE-T2- 69 311 704
- JP-A- H06 230 225
- JP-A- H07 192 510
- US-A- 4 711 512
- US-A- 5 634 708
- US-A- 5 745 266
- US-A1- 2015 124 303

## Beschreibung

Die vorliegende Anmeldung betrifft eine Leuchteneinrichtung für Fahrzeuge, insbesondere Kraftfahrzeuge. Derartige Leuchteneinrichtungen können beispielsweise als Rückleuchte, Frontleuchte, Blinker, Bremsleuchte oder dergleichen dienen.

Der Hauptzweck derartiger Leuchteneinrichtungen liegt im Bereich der Fahrsicherheit, um - beispielsweise im Fall von Frontscheinwerfern - im Dunkeln dem Fahrer eine Sicht auf eine zu befahrende Strecke zu ermöglichen, und auch das Fahrzeug insbesondere im Dunkeln für andere Verkehrsteilnehmer sichtbar zu machen, oder auch anderen Verkehrsteilnehmern Hinweise über das Fahrverhalten zu geben, was insbesondere bei Blinkern oder Bremslichtern der Fall ist.

Zusätzlich zu diesen Funktionen rückte in den letzten Jahren auch das Lichtdesign in den Vordergrund. Verschiedene Fahrzeughersteller arbeiten daran, ihre Fahrzeuge mit einer charakteristischen "Leuchtsignatur" zu versehen, d.h. die Leuchteneinrichtungen so auszugestalten, dass das von der Leuchteneinrichtung ausgehende Licht eine charakteristische Gestalt aufweist, welche beispielsweise für alle Fahrzeuge eines Unternehmens ähnlich oder identisch sein kann.

Eine Möglichkeit zur Realisierung von Leuchtsignaturen ist die Verwendung von Hologrammen, welche holografische Bilder erzeugen, von denen das Licht der Leuchteneinrichtung scheinbar ausgeht. Auf diese Weise ist es beispielsweise möglich, Rückleuchten oder Bremslichter scheinbar außerhalb des Fahrzeugs entstehen zu lassen, und/oder charakteristische Leuchtsignaturen wie Rechtecke, dreidimensionale Signaturen, Leuchtsignaturen mit eingearbeiteten Logos und dergleichen zu implementieren.

Derartige Beleuchtungseinrichtungen umfassen typischerweise das Hologramm selbst, welches die gewünschte Leuchtsignatur erzeugt, und eine Beleuchtungseinrichtung, um das Hologramm zu beleuchten.

Derartige Beleuchtungseinrichtungen werden typischerweise mit einer oder mehreren Leuchtdioden (LEDs) als Lichtquellen und einer Optik, insbesondere einer katadioptrischen Optik, zum Formen des von der Leuchtdiode oder den Leuchtdioden ausgehenden Lichtstrahls und Lenken des Lichtstrahls aus dem Hologramm implementiert. Leuchteneinrichtungen mit solchen Beleuchtungseinrichtungen benötigen typischerweise einen vergleichsweise großen Bauraum für Freistrahloptiken und/oder die verwendeten optischen Komponenten.

Die JP H06 230225 A offenbart einen Wellenleiter mit einem Einkoppelhologramm, einem ersten Auskoppelhologramm und einem zweiten Auskoppelhologramm. Das zweite Auskoppelhologramm koppelt dabei Licht aus dem Wellenleiter aus, das von dem ersten Auskoppelhologramm nicht ausgekoppelt wurde.

Die US 5 745 266 A offenbart eine Leuchteneinrichtung mit einem Wellenleiter, einem Einkoppelhologramm und einem Auskoppelhologramm, wobei letzteres eine Leuchtverteilung erzeugt.

Die US 2015 / 124 303 A1 und die JP H07 192 510 A offenbaren jeweils Wellenleiter mit Auskoppelhologrammen.

Die US 4 711 512 A offenbart eine Auskopplung aus einem Wellenleiter mit variabler Auskopplungseffizienz.

Weitere Leuchteneinrichtungen sind aus der DE 693 11 704 T2 und der US 5 634 708 A bekannt.

Es ist daher eine Aufgabe der vorliegenden Anmeldung, eine Leuchteneinrichtung bereitzustellen, bei welcher eine Beleuchtung eines Hologramms mit reduziertem Bauraum möglich ist.

Diese Aufgabe wird gelöst durch eine Leuchteneinrichtung nach Anspruch 1. Die Unteransprüche definieren weitere Ausführungsformen.

Erfindungsgemäß wird eine Leuchteneinrichtung für Fahrzeuge bereitgestellt, aufweisend:
ein primäres Hologramm zum Erzeugen einer Leuchtfunktion in Antwort auf eine Beleuchtung mit Beleuchtungslicht, und
ein sekundäres Hologrammsystem, wobei das sekundäre Hologrammsystem aufweist:
   ein Wellenleitersubstrat,
   ein Einkoppelhologramm zum Einkoppeln von Licht von einer Lichtquelle in das Wellenleitersubstrat, und
   ein Auskoppelhologramm zum Auskoppeln von Licht aus dem Wellenleitersubstrat als das Beleuchtungslicht.

Durch das sekundäre Hologrammsystem kann eine kompakte Beleuchtung des primären Hologramms erreicht werden. Das primäre Hologramm ist dabei das Hologramm, welches die gewünschte Leuchtsignatur erzeugt, während das sekundäre Hologrammsystem zur Beleuchtung dient. Insbesondere durch die Bereitstellung eines Wellenleitersubstrats in Verbindung mit dem Einkoppelhologramm und dem Auskoppelhologramm kann eine im Wesentlichen beliebige Anordnung des sekundären Hologrammsystems zu dem primären Hologramm und somit eine gute Ausnutzung eines verfügbaren Bauraums erreicht werden.

Das Auskoppelhologramm kann eine räumlich variable Auskoppeleffizienz aufweisen. So kann über einen relativ großen Bereich Licht aus dem Wellenleitersubstrat ausgekoppelt werden, was eine Ausleuchtung eines großen Bereichs des primären Hologramms ermöglicht.

Die Auskoppeleffizienz kann hierzu insbesondere mit zunehmender Entfernung von dem Einkoppelhologramm ansteigen.

Das Einkoppelhologramm und/oder das Auskoppelhologramm können eine spektrale Filterfunktion bereitstellen. Dies ermöglicht die Verwendung breitbandiger Lichtquellen, ohne separate Filter bereitstellen zu müssen.

Das Einkoppelhologramm kann als Transmissionsgitter oder Reflexionsgitter eingerichtet sein.

Auch das Auskoppelhologramm kann als Transmissionsgitter oder Reflexionsgitter eingerichtet sein.

Das Auskoppelhologramm kann auf einer dem primären Hologramm zugewandten Seite des Wellenleitersubstrats oder auf einer von dem primären Hologramm abgewandten Seite des Wellenleitersubstrats angeordnet ist.

Es sind also eine Vielzahl verschiedener Implementierungen möglich.

Das primäre Hologramm kann austauschbar sein.

Indem das primäre Hologramm austauschbar ist, kann das gleiche sekundäre Hologrammsystem zusammen mit verschiedenen primären Hologrammen zur Erzeugung verschiedener Leuchtsignaturen genutzt werden.

Das primäre Hologramm kann ein Transmissionshologramm, ein Reflexionshologramm, ein Reflexionshologramm mit Kantenbeleuchtung oder ein Transmissionshologramm mit Kantenbeleuchtung ist.

Die erfindungsgemäße Leuchteneinrichtung ist also für verschiedene Arten von primären Hologrammen einsetzbar.

Die Leuchteneinrichtung kann eine Vielzahl sekundärer Hologrammsysteme, umfassend das sekundäre Hologrammsystem, aufweisen, wobei die Vielzahl sekundärer Hologrammsysteme eingerichtet sind, jeweiliges Beleuchtungslicht auf das primäre Hologramm zu lenken.

Das primäre Hologramm kann dabei eine Vielzahl von Leuchtfunktionen implementieren, wobei der Vielzahl von sekundären Hologrammsystemen eine oder mehrere Leuchtfunktionen der Vielzahl von Leuchtfunktionen zugeordnet sind.

Durch die Bereitstellung mehrerer sekundärer Hologrammsysteme kann Licht von verschiedenen Richtungen, insbesondere an verschiedenen Kanten, des primären Hologramms eingekoppelt werden, und es können verschiedene Leuchtfunktionen realisiert werden.

Die Leuchteneinrichtung kann weiter die Lichtquelle aufweisen, wobei das Einkoppelhologramm auf einer der Lichtquelle zugewandten Seite des Wellenleitersubstrats oder auf einer der Lichtquelle abgewandten Seite des Wellenleitersubstrats angeordnet ist.

Verschiedene Anordnungsmöglichkeiten des Einkoppelhologramms und/oder des Auskoppelhologramms ermöglichen weitere Freiheiten beim Design der Leuchteneinrichtung.

Die Erfindung wird nachfolgend unter Bezugnahme auf die beigefügten Zeichnungen anhand verschiedener Ausführungsformen näher erläutert. Es zeigen:
Fig. 1 eine schematische Darstellung einer Leuchteneinrichtung gemäß einer Ausführungsform,
Fig. 2 eine Querschnittsansicht eines sekundären Hologrammsystems gemäß einer Ausführungsform,
Figuren 3A und 3B Graphen zur Veranschaulichung von Eigenschaften eines Auskoppelhologramms des sekundären Hologrammsystems der Fig. 3,
Figuren 4A-4D verschiedene Varianten für Einkoppelhologramme eines sekundären Hologrammsystems gemäß mancher Ausführungsformen
Figuren 5A-5D verschiedene Varianten für Auskoppelhologramme eines sekundären Hologrammsystems gemäß mancher Ausführungsformen,
Figuren 6A-6D verschiedene Varianten für primäre Hologramme von Leuteneinrichtungen gemäß mancher Ausführungsformen,
Figuren 7A-7C verschiedene Varianten der Positionierung vom sekundären Hologrammsystem und primärem Hologramm gemäß verschiedener Ausführungsformen,
Fig. 8 eine Leuchteneinrichtung mit divergierender Beleuchtung eines primären Hologramms gemäß mancher Ausführungsformen, und
Figuren 9A und 9B eine Ausführungsform einer Leuchteneinrichtung mit mehreren sekundären Hologrammsystemen.

Im Folgenden werden verschiedene Ausführungsformen der vorliegenden Erfindung detailliert erläutert. Diese Ausführungsformen dienen nur der Veranschaulichung und sind nicht als einschränkend auszulegen. Variationen, Abwandlungen und Details, die für eine der Ausführungsformen beschrieben werden, sind auch auf andere Ausführungsformen anwendbar und werden daher nicht wiederholt beschrieben. Merkmale verschiedener beschriebener Ausführungsformen sind miteinander kombinierbar. Beispielsweise werden unter Bezugnahme auf verschiedene Figuren verschiedene Details von Leuchteneinrichtungen und Variationen dieser Details erläutert, und die unter Bezugnahme auf verschiedene Figuren beschriebenen Variationen und Details sind frei miteinander kombinierbar. Sämtliche Figuren zeigen Querschnittsansichten von Leuchteneinrichtungen oder Teilen hiervon, falls nichts anderes in der jeweiligen Figurenbeschreibung angemerkt ist. In den Figuren deuten gleiche Bezugszeichen auf gleiche oder einander entsprechende Elemente hin, und die entsprechende Beschreibung solcher Elemente wird nicht wiederholt dargestellt.

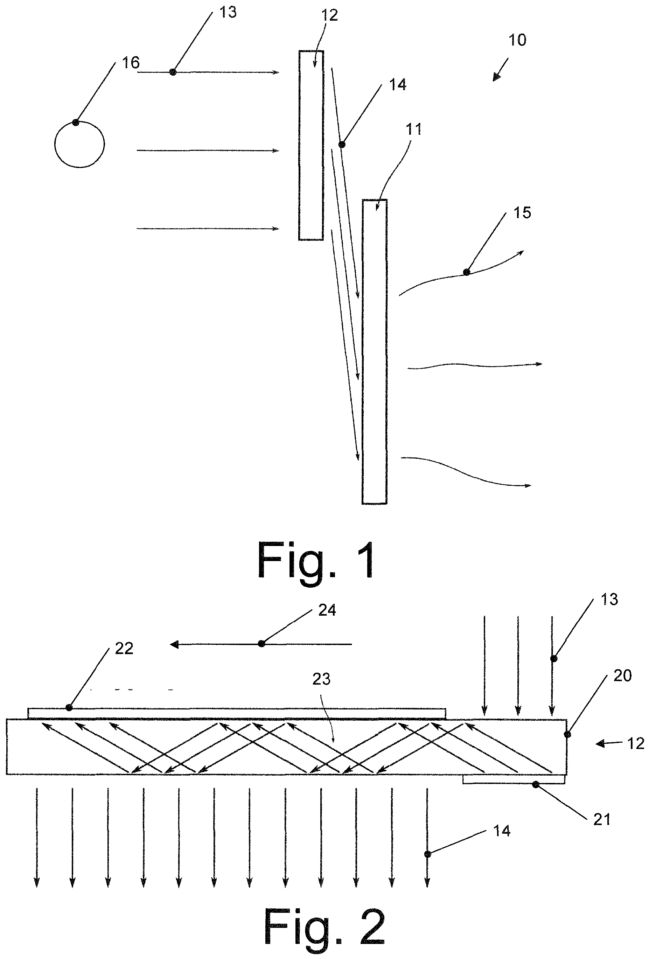

Die Fig. 1 zeigt eine schematische Ansicht einer Leuchteneinrichtung 10 gemäß einer Ausführungsform. Die Leuchteneinrichtung 10 umfasst eine Lichtquelle 16, ein sekundäres Hologrammsystem 12 sowie ein primäres Hologramm 11. Die Lichtquelle 16 kann eine oder mehrere Leuchtdioden oder auch andere Lichtquellen wie Laserlichtquellen oder Weißlichtquellen umfassen, um Lichtstrahlen 13 zu erzeugen, welche dem sekundären Hologrammsystem 12 zugeführt werden. Das sekundäre Hologrammsystem 12 lenkt die empfangenen Lichtstrahlen 13 zu Beleuchtungslicht 14 um, das unter einem vorgegebenen Winkel auf das primäre Hologramm 11 fällt. Dieser vorgegebene Winkel ist dabei so gewählt, dass das primäre Hologramm 11 als Antwort auf die Beleuchtung mit dem Beleuchtungslicht 14 ein in dem primären Hologramm 11 aufgenommenes Bild gemäß Bildlichtstrahlen 15 erzeugt. Das aufgenommene Bild kann insbesondere eine Leuchtsignatur wie eingangs beschrieben definieren, um dem Licht der Leuchteneinrichtung 10 ein von einem Designer gewünschtes Aussehen zu verleihen. Der vorgegebene Winkel entspricht insbesondere einem Winkel, unter welchem das Hologramm 11 bei der Aufnahme mit einem sogenannten Referenzstrahl beleuchtet wurde, wie Fachleuten auf dem Gebiet der Holographie geläufig ist. Die Funktion des primären Hologramms 11, ein Bild zum Realisieren der Beleuchtung zu erzeugen, wird im Rahmen dieser Anmeldung auch als Leuchtfunktion bezeichnet.

Durch die Verwendung des sekundären Hologrammsystems 12 kann eine kompakte Anordnung bereitgestellt werden. Zudem kann die Leuchteneinrichtung 10 der Fig. 1 als modulares System konzipiert sein, bei welchem das primäre Hologramm 11 austauschbar ist. Das sekundäre Hologrammsystem 12 stellt das Beleuchtungslicht 14 mit einer definierten Charakteristik bereit, und jedes primäre Hologramm 11, das in Antwort auf Beleuchtung mit dieser definierten Charakteristik ein Bild erzeugt, kann in der Leuchteneinrichtung 10 der Fig. 1 verwendet werden. Somit können verschiedene Leuchtsignaturen nur durch Austausch des primären Hologramms 11 erzeugt werden, während der Rest der Leuchteneinrichtung 10 unverändert bleiben kann. Dies erleichtert das Design bzw. die Herstellung derartiger Leuchteneinrichtungen.

Zu bemerken ist, dass das primäre Hologramm 11 ein einziges Hologramm, aber auch mehrere Einzelhologramme aufweisen kann, je nach gewünschter Leuchtsignatur.

Wie später noch detailliert erläutert werden wird, können als primäres Hologramm 11 verschiedene Hologrammtypen wie Transmissionshologramme, Reflexionshologramme oder kantenbeleuchtete Hologramme verwendet werden.

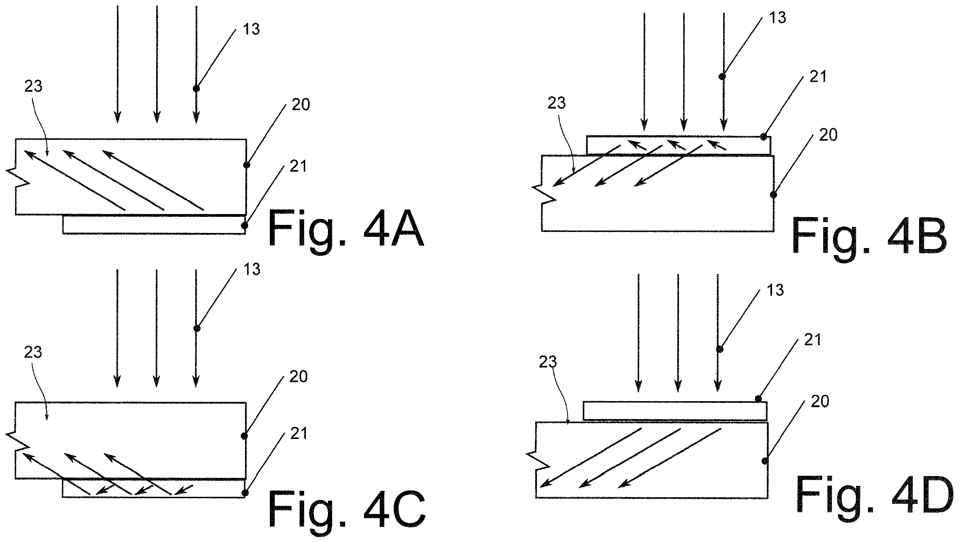

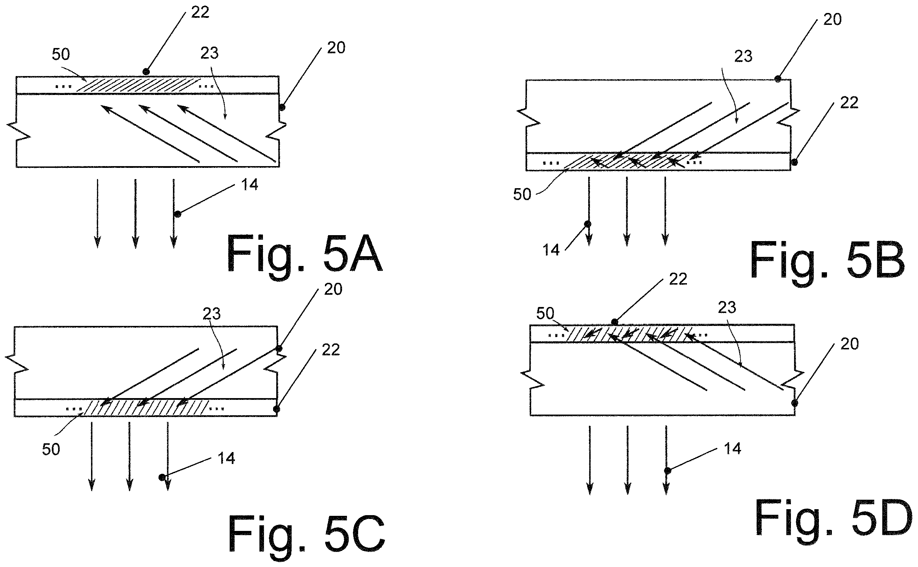

Ein Beispiel für den Aufbau des sekundären Hologrammsystems 12 gemäß mancher Ausführungsformen wird unter Bezugnahme auf die Fig. 2 nun näher erläutert. Variationen dieses Aufbaus werden später unter Bezugnahme auf die Figuren 4 und 5 erläutert.

Bei der Ausführungsform der Fig. 2 weist das sekundäre Hologrammsystem 12 ein Substrat 20, welches als Wellenleiter dient, ein Einkoppelhologramm 21 und ein Auskoppelhologramm 22 auf. Das Substrat, welches die Wellenleiterfunktion bereitstellt, wird im Rahmen dieser Anmeldung auch kurz als Wellenleitersubstrat bezeichnet.

Das Wellenleitersubstrat 20 ist aus einem für die Wellenlänge des verwendeten Lichts transparenten Material, beispielsweise einem Glas oder einem transparenten Kunststoff, gefertigt. Die von der Lichtquelle (beispielsweise Lichtquelle 16 in Fig. 1) kommenden Lichtstrahlen 13 treffen auf das Einkoppelhologramm 21. Bei dem Beispiel der Fig. 2 treffen die Lichtstrahlen 13 annähernd senkrecht auf das Wellenleitersubstrat 20 und gelangen dann zu dem auf der gegenüberliegenden Seite des Wellenleitersubstrats 20 angeordneten Einkoppelhologramm 21. Andere mögliche Konfigurationen werden später unter Bezugnahme auf die Fig. 4 erläutert.

Das Einkoppelhologramm 21 ist als holographisches Gitter ausgestaltet und lenkt die Lichtstrahlen 13 unter einem Winkel, der (gemessen zur Senkrechten) größer ist als der Winkel der Totalreflexion an der Grenzfläche zwischen dem Wellenleitersubstrat 20 und der Umgebung, in das Wellenleitersubstrat 20. Somit ergibt sich in das Wellenleitersubstrat 20 eingekoppeltes Licht 23. Das eingekoppelte Licht 23 fällt dann wie dargestellt auf das Auskoppelhologramm 22. Das Auskoppelhologramm 22 ist wiederum als holographisches Gitter ausgebildet, welches das eingekoppelte Licht 23 unter einem Winkel ablenkt, dass es aus dem Wellenleitersubstrat 20 als das Beleuchtungslicht 14 austritt, im Beispiel der Fig. 2 senkrecht zu dem Wellenleitersubstrat 20. Auch andere Winkel sind hier möglich, solange der Winkel kleiner ist als der Winkel der Totalreflexion und somit Licht ausgekoppelt wird.

Holographische Gitter, die durch das Einkoppelhologramm 21 und dem Auskoppelhologramm 22 verwendet werden, sind im Falle von Reflexionsgittern in der Regel wellenselektiv, d.h. nur ein Licht einer bestimmten Wellenlänge bzw. eines schmalen Wellenlängenbereichs wird in die jeweils gewünschte Richtung gebeugt. Somit kann das sekundäre Hologrammsystem 12 durch Verwendung von Reflexionsgittern auch eine Filterfunktion realisieren, sodass nur Beleuchtungslicht 14 einer Wellenlänge oder eines Wellenlängenbereichs, für die das jeweilige primäre Hologramm 11 ausgelegt ist, zu dem primären Hologramm 11 gelangt. Dies ist insbesondere dann von Interesse, wenn als Lichtquelle 16 relativ breitbandige Lichtquellen verwendet werden. Eine derartige spektrale Filterfunktion kann durch das Einkoppelhologramm 21, das Auskopplungshologramm 22 oder beide Hologramme 21, 22 realisiert sein. Durch diese Filterung kann eine chromatische Dispersion, die ansonsten in dem Bild zu Unschärfen führen könnte, könnte, verringert werden.

Das Auskoppelhologramm 22 weist bei der Ausführungsform der Fig. 2 eine relativ große Ausdehnung in Richtung eines Pfeils 24 auf. Bei der Ausführungsform der Fig. 2 weist das Auskoppelhologramm 22 in Richtung des Pfeils 24 eine zunehmende Auskoppeleffizienz auf, d.h. das holographische Gitter des Auskoppelhologramms 22 ist so eingerichtet, dass es einen zunehmend größeren Anteil des auf das Auskoppelhologramm 22 treffenden Lichtes als Beleuchtungslicht 14 aus dem Hologramm ausgekoppelt, während jeweils ein übriger Anteil des Lichtes in dem Wellenleitersubstrat 20 weitergeleitet wird, um nach Reflexionen in dem Wellenleitersubstrat 20 wiederum auf das Auskoppelhologramm 22 zu treffen. Auf diese Weise kann das Beleuchtungslicht 14 über eine große Fläche ausgekoppelt werden.

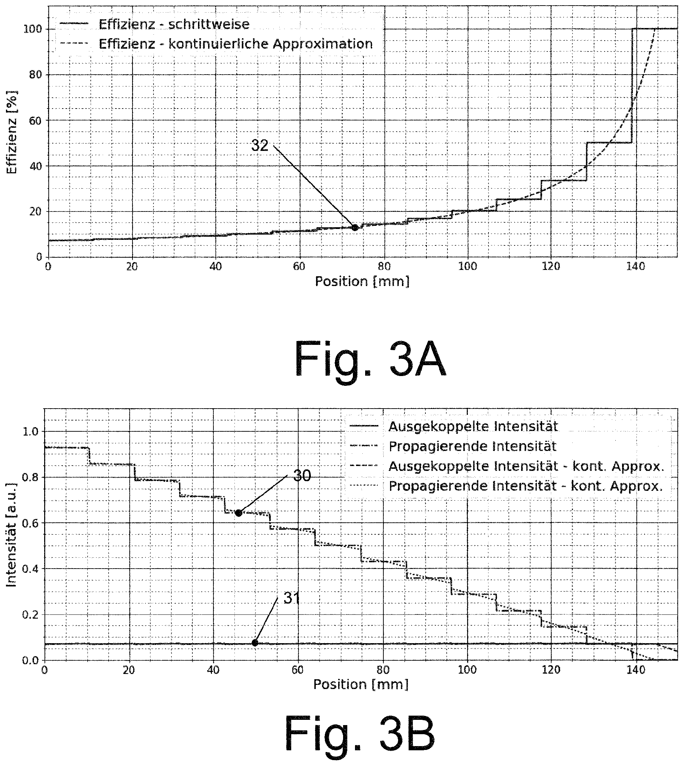

Ein Beispiel für eine derartige variable Auskoppeleffizienz in Richtung des Pfeils 24 ist in den Fig. 3A und 3B dargestellt. In den Fig. 3A und 3B zeigt die x-Achse eine Position entlang des Auskoppelhologramms 22 in Richtung des Pfeils 24 der Fig. 2. Als Beispiel für ein Auskoppelhologramm wurde hier ein Auskoppelhologramm mit einer Länge von 150 mm in Richtung des Pfeils 24, einer Dicke des Wellenleitersubstrats 20 von 2 mm und einem Winkel des eingekoppelten Lichts 23 innerhalb des Wellenleitersubstrat 20 von 70° verwendet. Diese Werte stellen lediglich als Beispiel dar, und andere Konfigurationen sind ebenso möglich.

Kurven 32 in Fig. 3A zeigen die Auskoppeleffizienz in %, d.h. geben an, welcher Anteil des auf das Auskoppelhologramm treffenden Lichtes ausgekoppelt wird. Der übrige Anteil wird dann in dem Wellenleitersubstrat weitergeleitet, um erneut auf das Auskoppelhologramm zu treffen.

Kurven 30 in Fig. 3B zeigen die Intensität der in dem Wellenleitersubstrat 30 propagierenden Welle. Diese Intensität nimmt kontinuierlich ab, da jeweils ein Anteil des Lichtes ausgekoppelt wird. Kurven 31 zeigen die ausgekoppelte Intensität. Durch die steigenden Auskoppeleffizient ist die ausgekoppelte Intensität annähernd konstant, da von der abnehmenden Intensität gemäß den Kurven 30 durch die steigende Effizienz gemäß den Kurven 32 ein zunehmend größerer Anteil ausgekoppelt wird.

Dabei weisen die Kurven 30-32 jeweils eine erste Kurve auf, die eine schrittweise Konfiguration anzeigen, welche technisch gut realisierbar ist, d.h. die Eigenschaften des Auskoppelhologramms 22 werden schrittweise verändert, und bleiben dann jeweils für einen bestimmten Bereich gleich. Eine zweite Kurve zeigt jeweils eine kontinuierliche Approximation dieses schrittweisen Verhaltens.

Durch die Verwendung einer derartigen variierenden Auskoppeleffizienz kann eine gleichmäßige Beleuchtung des primären Hologramms über eine große Fläche realisiert werden. Die Auskoppeleffizienz steigt also mit zunehmender Entfernung von dem Einkoppelhologramm an.

Nunmehr werden noch verschiedene Variationen und Abwandlungen der Leuchteneinrichtung 10 der Fig. 1 sowie Komponenten hiervon diskutiert. Zunächst werden unter Bezugnahme auf die Figuren 4A bis 4D verschiedene Anordnungsmöglichkeiten des Einkoppelhologramms 21 erläutert.

Die Fig. 4A zeigt dabei die schon unter Bezugnahme auf die Fig. 2 kurz diskutierte Konfiguration. Hier ist das Einkoppelhologramm 21 auf einer gegenüberliegenden Seite des Wellenleitersubstrats 20 zu der Seite, auf die die Lichtstrahlen 13 treffen, angeordnet. Das Einkoppelhologramm 21 arbeitet hier als Reflexionsgitter, d.h. das Licht 13 wird unter dem gewünschten Winkel in Reflexion von dem Einkoppelhologramm 21 gebeugt, um das eingekoppelte Licht 23 zu bilden.

Bei der Konfiguration der Fig. 4B ist das Einkoppelhologramm 21 auf der gleichen Seite des Wellenleitersubstrats 20 angeordnet, auf der das Licht 13 auf das Wellenleitersubstrat 20 fällt. Das Einkoppelhologramm 21 arbeitet hier ebenfalls als Reflexionsgitter und reflektiert das einfallende Licht unter einem gewünschten Winkel zu einer von dem Wellenleitersubstrat 20 abgewandten Seite des Einkoppelhologramms 21 hin. Dieses so gebeugte Licht wird an der Grenzfläche zwischen dem Einkoppelhologramm 21 und der Umgebung totalreflektiert und gelangt so als eingekoppeltes Licht 23 in das Wellenleitersubstrat 20.

Bei der Variante der Fig. 4C ist wie bei der Fig. 4A das Einkoppelhologramm auf einer Seite des Wellenleitersubstrats 20 angeordnet, die der Seite, auf die das Licht 13 trifft, gegenüber liegt. Das Einkoppelhologramm 21 arbeitet hier als Transmissionsgitter, d.h. das einfallende Licht 13 wird unter einem Winkel in Richtung einer dem Wellenleitersubstrat 20 abgewandten Seite des Einkoppelhologramms 21 gebeugt und an der Grenzfläche zwischen dem Einkoppelhologramm 21 und der Umgebung totalreflektiert, um als eingekoppeltes Licht 23 in das Wellenleitersubstrat 20 zu gelangen.

Bei der Variante 4D die ist das Einkoppelhologramm 21 auf derjenigen Seite des Wellenleitersubstrats 20 angeordnet, auf der das Licht 13 auf das Wellenleitersubstrat 20 fällt, und ist als Transmissionsgitter ausgestaltet. Das Licht 13 wird somit durch das Einkoppelhologramm 21 gebeugt und als eingekoppeltes Licht 23 in das Wellenleitersubstrat gelenkt.

Entsprechende Varianten, wie für das Einkoppelhologramm 21 unter Bezugnahme auf die Figuren 4A bis 4D dargestellt, sind auch für das Auskoppelhologramm 22 möglich. Dies wird nunmehr unter Bezugnahme auf die Figuren 5A bis 5D erläutert.

Die Fig. 5A zeigt eine Konfiguration wie bereits unter Bezugnahme auf die Fig. 2 gezeigt. Hier ist das Auskoppelhologramm 22 auf einer Seite des Wellenleitersubstrats 20 angeordnet, die derjenigen Seite, auf der das Beleuchtungslicht 14 ausgekoppelt wird, gegenüber liegt. Das Auskoppelhologramm 22 arbeitet hier als Reflexionsgitter und beugt durch Braggebenen 50 des Auskoppelhologramms 22 das eingekoppelte Licht 23 in eine Richtung, die ein Auskoppeln aus dem Wellenleitersubstrat 20 ermöglicht, insbesondere im Wesentlichen senkrecht zu einer Oberfläche des Wellenleitersubstrats 20.

In Fig. 5B ist das Auskoppelhologramm 22 auf der gleichen Seite des Wellenleitersubstrats angeordnet, auf der das Beleuchtungslicht 14 ausgekoppelt wird, und arbeitet ebenfalls als Reflexionsgitter. Das eingekoppelte Licht 23 geht dabei zunächst ohne Beugung durch das Auskoppelhologramm 22 zu einer von dem Wellenleitersubstrat 20 abgewandten Seite des Auskoppelhologramms 22, wird dort reflektiert und dann durch das Auskoppelhologramm 22 zur Auskopplung als Beleuchtungslicht 14 gebeugt.

In der Variante der Fig. 5C ist das Auskoppelhologramm auf der gleichen Seite des Wellenleitersubstrats 20 angeordnet, auf der das Beleuchtungslicht 14 ausgekoppelt wird. Das Auskoppelhologramm 22 arbeitet hier als Transmissionsgitter und beugt das eingekoppelte Licht 23 in eine Richtung, die ein Auskoppeln als Beleuchtungslicht 14 ermöglicht, beispielsweise in eine Richtung im Wesentlichen senkrecht zur Grenzfläche zwischen dem Auskoppelhologramm 22 und der Umgebung.

Bei der Variante der Fig. 5D ist schließlich das Auskoppelhologramm 22 auf einer Seite des Wellenleitersubstrats 20 angeordnet, die der Seite, auf der das Beleuchtungslicht 14 ausgekoppelt wird, gegenüber liegt, und arbeitet als Transmissionsgitter. Das eingekoppelte Licht 23 geht in diesem Fall zunächst durch das Auskoppelhologramm 22 hindurch, wird auf einer dem Wellenleitersubstrat 20 gegenüberliegenden Seite des Auskoppelhologramms 22 reflektiert und dann durch Braggebenen 50 gebeugt, um als Beleuchtungslicht 40 ausgekoppelt zu werden.

Auch wenn in den Figuren 4 und 5 das Licht 13 senkrecht auf das Wellenleitersubstrat 20 trifft und das Beleuchtungslicht 14 senkrecht aus dem Wellenleitersubstrat ausgekoppelt wird, sind auch andere Winkel möglich, wie dies beispielsweise in Fig. 1 durch das Beleuchtungslicht 14 gezeigt ist. Für derartige Winkel eignen sich insbesondere Konfigurationen zur Auskopplung wie in der Fig. 5C gezeigt, d.h. mittels eines Auskoppelhologramms, das als Transmissionsgitter arbeitet und auf der gleichen Seite angeordnet ist wie auf der das Licht ausgekoppelt wird, bzw. zum Einkoppeln die Konfiguration der Fig. 4B oder Fig. 4D, bei der das Einkoppelhologramm 21 auf derjenigen Seite des Wellenleitersubstrats angeordnet ist, auf die das Licht 13 trifft.

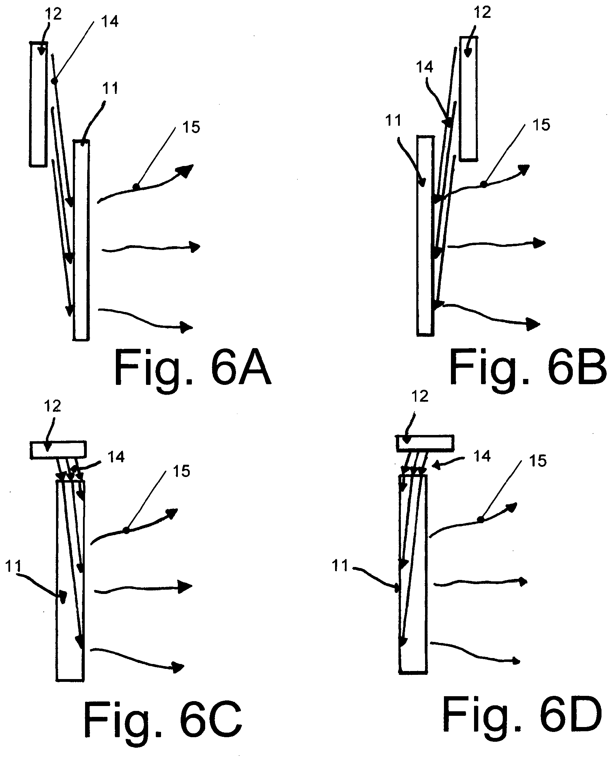

Das sekundäre Hologrammsystem 12 kann in Zusammenhang mit verschiedenen Arten von primären Hologrammen eingesetzt werden, insbesondere Transmissionshologrammen, Reflexionshologrammen oder auch kantenbeleuchteten Hologrammen. Dies wird nunmehr unter Bezugnahme auf die Figuren 6A bis 6B erläutert.

In Fig. 6A ist eine Konfiguration gezeigt, in der wie in Fig. 1 das primäre Hologramm 11 als Transmissionshologramm arbeitet. Dies bedeutet, dass das Beleuchtungslicht 14 auf eine Seite des primären Hologramms 11 fällt, durch das Hologramm 11 in Transmission entsprechend dem in dem Hologramm 11 aufgenommenen Bild gebeugt wird und die Bildlichtstrahlen 15 dann von einer Seite des Hologramms 11 ausgehen, die der Seite, auf die das Beleuchtungslicht 14 fällt, gegenüber liegt.

In Fig. 6B ist eine Konfiguration gezeigt, in der das primäre Hologramm 11 als Reflexionshologramm ausgestaltet ist. Hier fällt das Beleuchtungslicht 14 auf die gleiche Seite des primären Hologramms 11, von der die Bildlichtstrahlen 15 ausgehen, indem das primäre Hologramm 11 das Beleuchtungslicht 14 in eine entsprechende Lichtrichtung beugt.

Die Figuren 6C und 6D zeigen schließlich die Möglichkeit kantenbeleuchtete Hologramme, wobei ich hier sowohl Transmissionshologramme (Fig. 6C) als auch Reflexionshologramme (Fig. 6D) als primäres Hologramm 11 einsetzbar sind. Kantenbeleuchtet bedeutet in diesem Fall, dass das Beleuchtungslicht 14 über eine Seitenfläche des primären Hologramms 11 in dieses eingekoppelt wird, wie dies in den Figuren 6C und 6D gezeigt ist.

Im Falle der Fig. 6C wird das Beleuchtungslicht 14 in einer Richtung in das primäre Hologramm 11 zu der Seite hin, von der die Bildlichtstrahlen 15 ausgehen, eingekoppelt. Das primäre Hologramm 11 arbeitet dann im Wesentlichen als Transmissionshologramm. Im Falle der Fig. 6D wird das Beleuchtungslicht 14 wie in Fig. 6B gezeigt zu der Seite des primären Hologramms 11 hin eingekoppelt, die der Seite, von der die Bildlichtstrahlen 15 ausgehen, gegenüberliegt. Hier arbeitet das primäre Hologramm 11 also im Wesentlichen als Reflexionshologramm. Alle diese Konfigurationen können in Leuchteneinrichtungen gemäß der vorliegenden Erfindung implementiert werden und mit den verschiedenen Varianten für das sekundäre Hologrammsystem, die unter Bezugnahme auf die Figuren 2-5 diskutiert wurden, kombiniert werden.

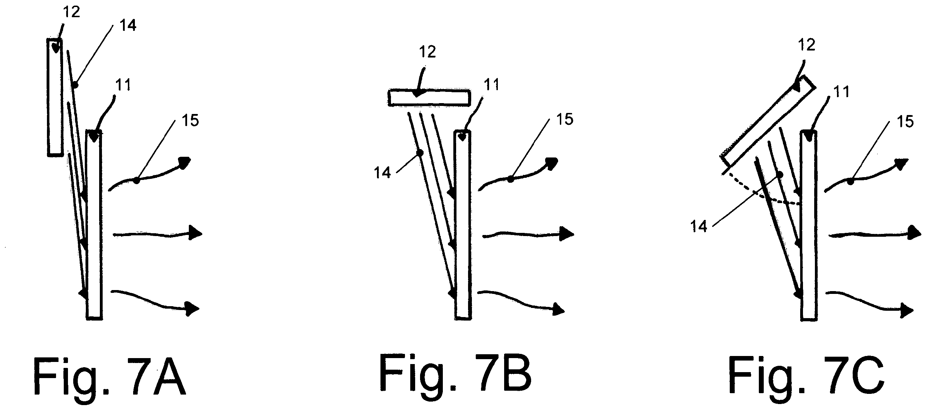

Das sekundäre Hologrammsystem 12 kann unter verschiedenen Winkeln im Raum zu dem primären Hologramm 11 positioniert werden, wobei Winkel, unter denen das Beleuchtungslicht 14 aus dem sekundären Hologrammsystem austritt, entsprechend angepasst werden können. Beispiele hierfür werden nunmehr unter Bezugnahme auf die Fig. 7 erläutert.

Die Anordnung der Fig. 7A entspricht im Wesentlichen der Anordnung der Fig. 1. Hier ist eine Seite des sekundären Hologrammsystems 12, von der das Beleuchtungslicht 14 emittiert wird, parallel zu einer Seite des primären Hologramms, an der das Beleuchtungslicht 14 empfangen wird. In der Fig. 7B stehen diese Seiten senkrecht zueinander. In der Fig. 7C ist ein Winkel zwischen der parallelen Anordnung der Fig. 7A und der senkrechten Anordnung der Fig. 7B gewählt. Dieser kann im Wesentlichen beliebig gewählt werden, wenn die Richtung, in der das Beleuchtungslicht 14 ausgehend von dem sekundären Hologrammsystem 12 emittiert wird, entsprechend angepasst wird. In den Figuren 7A-7C ist dabei das primäre Hologramm 11 ein Transmissionshologramm. Entsprechende verschiedene Anordnungen sind jedoch auch bei Reflexionshologrammen wie in Fig. 6B gezeigt oder bei kantenbeleuchteten Hologrammen wie in den Figuren 6C und 6D gezeigt möglich.

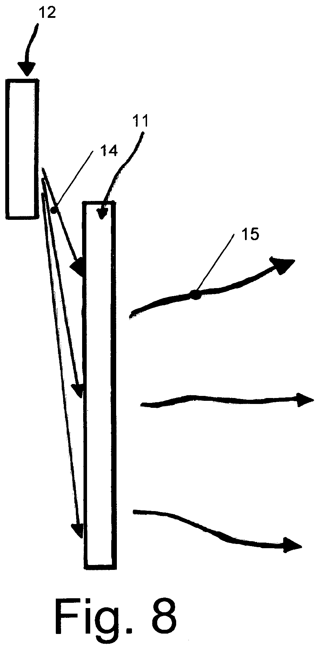

Bei den bisherigen Ausführungsbeispielen erzeugt das sekundäre Hologrammsystem 12 kollimiertes Beleuchtungslicht 14, d.h. die Lichtstrahlen des Beleuchtungslichts 14 sind im Wesentlichen parallel zu einander. Grundsätzlich sind jedoch auch andere Arten von Beleuchtungslicht, beispielsweise divergentes oder konvergentes Beleuchtungslicht, möglich. Die Fig. 8 zeigt eine Leuchteinrichtung, bei der das Beleuchtungslicht 14, welches von dem sekundären Hologrammsystem 12 ausgeht, divergiert. Dies führt bei der Anordnung der Fig. 8 dazu, dass das Beleuchtungslicht an verschiedenen Stellen des primären Hologramms 11 unter verschiedenen Winkeln auftritt. Dementsprechend kann das primäre Hologramm 11 in diesem Fall ausgelegt sein, an verschiedenen Stellen in Antwort auf Licht, das unter entsprechenden verschiedenen Winkeln einfällt, das gewünschte Bild zu erzeugen. Dies kann beispielsweise dadurch geschehen, dass bei der Erstellung des primären Hologramms 11 ein Referenzstrahl in entsprechender Weise divergiert. Die Divergenz kann in einer Richtung, d.h. beispielsweise nur in der in der Querschnittsansicht der Fig. 8 dargestellten Richtung, divergieren und in einer Richtung senkrecht dazu kollimiert, d.h. im Wesentlichen parallel, sein, er kann aber auch in zwei Richtungen divergieren. In vielen Fällen wird jedoch ein kollimiertes Beleuchtungslicht 14 bevorzugt sein.

Auch die Ausrichtung des primären Hologramms 11 selbst zu einer Richtung, in der das Bild durch die Lichtstrahlen 15 erzeugt werden soll, kann innerhalb der Grenzen, die durch die Technologie des Hologramms 11 (seine Ausdehnung und die gewünschte Bildgröße) gesetzt sind, variiert werden.

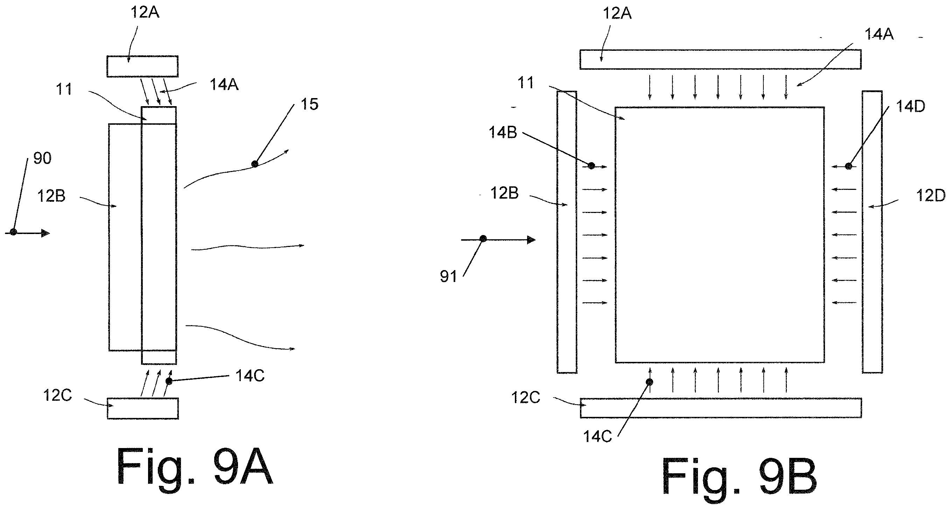

Bei den bisher diskutierten Ausführungsbeispielen ist jeweils ein sekundäres Hologrammsystem und ein primäres Hologramm 11 bereitgestellt. Es können jedoch auch mehrere sekundäre Hologrammsysteme verwendet werden, um ein primäres Hologramm mit verschiedenen Wellenlängen und/oder unter verschiedenen Winkeln zu beleuchten, beispielsweise um wahlweise verschiedene Bilder zu erzeugen und somit verschiedene Leuchtfunktionen implementieren. In diesem Fall sind in dem primären Hologramm 11 mehrere Bilder aufgenommen, beispielsweise in der gleichen Schicht des primären Hologramms 11 oder in übereinander liegenden Schichten. Da Hologramme winkel-und wellenlängenselektiv sind, wird ein entsprechendes Bild nur bei Beleuchtung unter einem entsprechenden Winkel (der in vielen Fällen einem Winkel eines Referenzstrahls bei der Aufnahme des Bildes entspricht) und mit einer entsprechenden Wellenlänge (die der Wellenlänge der bei der Aufnahme verwendeten Strahlen entspricht) rekonstruiert. Ein Beispiel für eine derartige Leuchteneinrichtung ist in den Figuren 9A und 9B dargestellt.

Dabei zeigt Fig. 9A eine Seitenansicht einer Leuchteneinrichtung, und die Fig. 9B zeigt eine Draufsicht. Die Draufsicht der Fig. 9B ist dabei eine Draufsicht in einer Blickrichtung, die durch einen Pfeil 90 in der Fig. 9A angedeutet ist, und die Seitenansicht der Fig. 9A ist eine Seitenansicht in einer Blickrichtung, die durch einen Pfeil 91 in der Fig. 9B angedeutet ist.

Die Ausführungsform der Figuren 9A und 9B weist ein primäres Hologramm 11 und vier sekundäre Hologrammsysteme 12A, 12B, 12C und 12D auf. Bei der Anordnung der Figuren 9A und 9B ist das primäre Hologramm 11 ein kantenbeleuchtetes Hologramm, wobei Beleuchtungslicht 14A bis 14 D, welches von den jeweiligen sekundären Hologrammsystemen 12A bis 12D ausgeht, über verschiedene Kanten in das primäre Hologramm 11 eingekoppelt wird und somit unter verschiedenen Winkeln in das primäre Hologramm 11 gelangen. "Verschiedene Winkel" kann dabei verschiedene absolute Winkelbeträge, aber auch verschiedene Raumrichtungen bei gleichem Winkelbetrag oder beides bedeuten. Durch wahlweises aktivieren von Lichtquellen, die den sekundären Hologrammsystemen 12A bis 12D zugeordnet sind, können somit verschiedene Bilder erzeugt werden. Dies kann beispielsweise für verschiedene Leuchtfunktionen wie Bremslicht oder Rückleuchte genutzt werden, oder es kann auf andere Weise genutzt werden, um Fahrern anderer Fahrzeugen eine Information zu übermitteln. Beispielsweise kann sich auf diese Weise die Form einer Rückleuchtenfunktion in Abhängigkeit von einem Abstand eines nachfolgenden Fahrzeugs ändern, um dem Fahrer des nachfolgenden Fahrzeugs eine Warnung zu geben, wenn er zu dicht auffährt.

Auch wenn vier sekundäre Hologrammsysteme in der Ausführungsform der Figuren 9A und 9B gezeigt sind, sind auch andere Anzahlen von sekundären Hologrammsystemen möglich. Zudem ist das Bereitstellen mehrerer sekundärer Hologrammsysteme nicht nur mit einem kantenbeleuchteten primären Hologramm 11 wie in den Figuren 9A und 9B dargestellt möglich, sondern auch mit den anderen unter Bezugnahme auf die Figuren 6A bis 6D diskutierten Möglichkeiten.

Angesichts der Vielzahl von beschriebenen Variationen ist ersichtlich, dass die vorliegende Erfindung nicht auf ein spezielles Ausführungsbeispiel begrenzt ist.

## Patentansprüche

1. Leuchteneinrichtung (10) für Fahrzeuge, aufweisend:
ein primäres Hologramm (11) zum Erzeugen einer Leuchtfunktion in Antwort auf eine Beleuchtung mit Beleuchtungslicht (14), und
ein sekundäres Hologrammsystem (12), wobei das sekundäre Hologrammsystem aufweist:
ein Wellenleitersubstrat (20),
ein Einkoppelhologramm (21) zum Einkoppeln von Licht (13) von einer Lichtquelle (16) in das Wellenleitersubstrat (20), und
ein Auskoppelhologramm (22) zum Auskoppeln von Licht aus dem Wellenleitersubstrat (20) als das Beleuchtungslicht (14).

2. Leuchteneinrichtung (10) nach Anspruch 1, wobei das Auskoppelhologramm eine räumlich variable Auskoppeleffizienz aufweist.

3. Leuchteneinrichtungen nach Anspruch 2, wobei die Auskoppeleffizienz mit zunehmender Entfernung von dem Einkoppelhologramm (21) ansteigt.

4. Leuchteinrichtung (10) nach einem der Ansprüche 1-3, wobei das Einkoppelhologramm (21) und/oder das Auskoppelhologramm (22) eine spektrale Filterfunktion bereitstellt.

5. Leuchteneinrichtung (10) nach einem der Ansprüche 1-4, wobei das Einkoppelhologramm (21) als Transmissionsgitter oder Reflexionsgitter eingerichtet ist.

6. Leuchteneinrichtung (10) nach einem der Ansprüche 1-5, wobei das Auskoppelhologramm als Transmissionsgitter oder Reflexionsgitter eingerichtet ist.

7. Leuchteneinrichtung (10) nach einem der Ansprüche 1-6, wobei das Auskoppelhologramm (22) auf einer dem primären Hologramm (11) zugewandten Seite des Wellenleitersubstrats (20) oder auf einer von dem primären Hologramm (11) abgewandten Seite des Wellenleitersubstrats (20) angeordnet ist.

8. Leuchteneinrichtung (10) nach einem der Ansprüche 1-7, wobei das primäre Hologramm (11) austauschbar ist.

9. Leuchteneinrichtung (10) nach einem der Ansprüche 1-8, wobei das primäre Hologramm ein Transmissionshologramm, ein Reflexionshologramm, ein Reflexionshologramm mit Kantenbeleuchtung oder ein Transmissionshologramm mit Kantenbeleuchtung ist.

10. Leuchteneinrichtung (10) nach einem der Ansprüche 1-9, wobei die Leuchteneinrichtung (10) eine Vielzahl sekundärer Hologrammsysteme, umfassend das sekundäre Hologrammsystem, aufweist, wobei die Vielzahl sekundärer Hologrammsysteme (12A-12D) eingerichtet sind, jeweiliges Beleuchtungslicht (14A-14B) auf das primäre Hologramm (11) zu lenken.

11. Leuchteneinrichtung (10) nach Anspruch 10, wobei das primäre Hologramm (11) eine Vielzahl von Leuchtfunktionen implementiert, wobei der Vielzahl von sekundären Hologrammsystemen (12A-12D) eine oder mehrere Leuchtfunktionen der Vielzahl von Leuchtfunktionen zugeordnet sind.

12. Leuchteneinrichtung (10) nach einem der Ansprüche 1-11, weiter aufweisend die Lichtquelle (16), wobei das Einkoppelhologramm auf einer der Lichtquelle (16) zugewandten Seite des Wellenleitersubstrats (20) oder auf einer der Lichtquelle (16) abgewandten Seite des Wellenleitersubstrats (20) angeordnet ist.

## Claims

1. Lighting device (10) for vehicles, having:
a primary hologram (11) for generating a lighting function in response to illumination with illumination light (14), and
a secondary hologram system (12), wherein the secondary hologram system has:
a waveguide substrate (20),
an input coupling hologram (21) for coupling light (13) from a light source (16) into the waveguide substrate (20), and
an output coupling hologram (22) for coupling light out of the waveguide substrate (20) in the form of the illumination light (14).

2. Lighting device (10) according to Claim 1, wherein the output coupling hologram has a spatially variable output coupling efficiency.

3. Lighting device according to Claim 2, wherein the output coupling efficiency increases as the distance from the input coupling hologram (21) increases.

4. Lighting device (10) according to one of Claims 1-3, wherein the input coupling hologram (21) and/or the output coupling hologram (22) provides a spectral filter function.

5. Lighting device (10) according to one of Claims 1-4, wherein the input coupling hologram (21) is configured as a transmission grating or reflection grating.

6. Lighting device (10) according to one of Claims 1-5, wherein the output coupling hologram is configured as a transmission grating or reflection grating.

7. Lighting device (10) according to one of Claims 1-6, wherein the output coupling hologram (22) is arranged on a side of the waveguide substrate (20) facing the primary hologram (11) or on a side of the waveguide substrate (20) facing away from the primary hologram (11).

8. Lighting device (10) according to one of Claims 1-7, wherein the primary hologram (11) is interchangeable.

9. Lighting device (10) according to one of Claims 1-8, wherein the primary hologram is a transmission hologram, a reflection hologram, a reflection hologram with edge illumination, or a transmission hologram with edge illumination.

10. Lighting device (10) according to one of Claims 1-9, wherein the lighting device (10) has a multiplicity of secondary hologram systems comprising the secondary hologram system, wherein the multiplicity of secondary hologram systems (12A-12D) are configured to direct respective illumination light (14A-14B) onto the primary hologram (11).

11. Lighting device (10) according to Claim 10, wherein the primary hologram (11) implements a multiplicity of lighting functions, wherein one or more lighting functions of the multiplicity of lighting functions are assigned to the multiplicity of secondary hologram systems (12A-12D) .

12. Lighting device (10) according to one of Claims 1-11, furthermore having the light source (16), wherein the input coupling hologram is arranged on a side of the waveguide substrate (20) facing the light source (16) or on a side of the waveguide substrate (20) facing away from the light source (16).

## Revendications

1. Dispositif d'éclairage (10) pour véhicules, présentant :
un hologramme primaire (11) permettant de générer une fonction d'éclairage en réponse à un éclairage par une lumière d'éclairage (14), et
un système d'hologramme secondaire (12), le système d'hologramme secondaire présentant :
un substrat de guide d'ondes (20),
un hologramme d'injection (21) pour injecter de la lumière (13) provenant d'une source de lumière (16) dans le substrat de guide d'ondes (20), et
un hologramme d'extraction (22) pour extraire de la lumière du substrat de guide d'ondes (20) comme lumière d'éclairage (14).

2. Dispositif d'éclairage (10) selon la revendication 1, dans lequel l'hologramme d'extraction présente un rendement d'extraction variable dans l'espace.

3. Dispositif d'éclairage selon la revendication 2, dans lequel le rendement d'extraction augmente avec une distance croissante par rapport à l'hologramme d'injection (21).

4. Dispositif d'éclairage (10) selon l'une quelconque des revendications 1 à 3, dans lequel l'hologramme d'injection (21) et/ou l'hologramme d'extraction (22) fournissent une fonction de filtre spectral.

5. Dispositif d'éclairage (10) selon l'une quelconque des revendications 1 à 4, dans lequel l'hologramme d'injection (21) est agencé sous forme de réseau de transmission ou de réseau de réflexion.

6. Dispositif d'éclairage (10) selon l'une quelconque des revendications 1 à 5, dans lequel l'hologramme d'extraction est agencé sous forme de réseau de transmission ou de réseau de réflexion.

7. Dispositif d'éclairage (10) selon l'une quelconque des revendications 1 à 6, dans lequel l'hologramme d'extraction (22) est disposé sur un côté du substrat de guide d'ondes (20) tourné vers l'hologramme primaire (11) ou sur un côté du substrat de guide d'ondes (20) détourné de l'hologramme primaire (11).

8. Dispositif d'éclairage (10) selon l'une quelconque des revendications 1 à 7, dans lequel l'hologramme primaire (11) est interchangeable.

9. Dispositif d'éclairage (10) selon l'une quelconque des revendications 1 à 8, dans lequel l'hologramme primaire est un hologramme de transmission, un hologramme de réflexion, un hologramme de réflexion à éclairage par la tranche ou un hologramme de transmission à éclairage par la tranche.

10. Dispositif d'éclairage (10) selon l'une quelconque des revendications 1 à 9, dans lequel le dispositif d'éclairage (10) présente une pluralité de systèmes d'hologramme secondaires, comprenant le système d'hologramme secondaire, dans lequel la pluralité de systèmes d'hologramme secondaires (12A à 12D) est agencée pour diriger la lumière d'éclairage (14A à 14B) respective sur l'hologramme primaire (11).

11. Dispositif d'éclairage (10) selon la revendication 10, dans lequel l'hologramme primaire (11) met en œuvre une pluralité de fonctions d'éclairage, dans lequel une ou plusieurs fonctions d'éclairage de la pluralité de fonctions d'éclairage sont associées à la pluralité de systèmes d'hologramme secondaires (12A à 12D).

12. Dispositif d'éclairage (10) selon l'une quelconque des revendications 1 à 11, présentant en outre la source de lumière (16), dans lequel l'hologramme d'injection est disposé sur un côté du substrat de guide d'ondes (20) tourné vers la source de lumière (16) ou sur un côté du substrat de guide d'ondes (20) détourné de la source de lumière (16).
